# EUROPEAN PATENT SPECIFICATION

(11) **EP 3 109 391 B1**
(45) Date of publication and mention of the grant of the patent: **07.04.2021**
(21) Application number: 14883324.7
(22) Date of filing: 29.12.2014
(51) Int. Cl.: E06B 3/02, E06B 3/66, E06B 3/34, E06B 3/56, E06B 3/10

(54) **IMPROVED TWO-PART WINDOW**
VERBESSERTES ZWEITEILIGES FENSTER
FENÊTRE AMÉLIORÉE EN DEUX ÉLÉMENTS

(30) Priority: 18.02.2014 ES 201430217 U
(43) Date of publication of application: 28.12.2016
(73) Proprietor: Iciar, De Las Casas Rodriguez, 28220 Madrid (ES)
(72) Inventor: Iciar, De Las Casas Rodriguez, 28220 Madrid (ES)
(74) Representative: Naranjo Marcos, Maria Antonia
(86) International application number: PCT/ES2014/070988
(87) International publication number: WO 2015/124808

(56) References cited:
- EP-A1- 2 672 051
- WO-A1-97/04206
- WO-A1-98/02632
- DE-A1- 3 440 906
- DE-A1-102012 100 114
- DATABASE WPI Derwent Publications Ltd., London, GB; XP055355969 & DE 198 16 735 A1 (FISCHER JOHANN) 28 October 1999
- DATABASE WPI Derwent Publications Ltd., London, GB; AN 1990-, XP055355970 & DE 38 35 331 A1 (HAUSMANN BLOMBERGER HOLZ) 19 April 1990
- DATABASE WPI Derwent Publications Ltd., London, GB; XP055355972 ' FRAME STRUCTURE FOR WOODEN SASH WINDOW HAS LAMINATED WOOD WHICH IS CUT OFF TO FORM WOODEN SASH WINDOW FRAME' & JP 2003 120131 A (SEKISUI HOUSE KK) 23 April 2003
- XP055359136 Retrieved from the Internet: <URL:http://web.archive.org/web/20120205081 805/ <a href='' http://www.ondiseno.com/noticia.php?id=2931 '' > http://www.ondiseno.com/noticia.php?id=2931 </a>>

## Description

### OBJECT OF THE INVENTION

The proposed invention refers to a new window layout of the type of windows made up starting with a micro-laminated wood frame and several glass sheets with a built-in air chamber.

### FIELD OF THE INVENTION

The field of the invention is the construction materials manufacturing industry, especially woodwork shops, glass manufacturing factories and accessories for Windows.

### BACKGROUND OF THE INVENTION

There is a lot of background on Windows.

There is also some background regarding Windows formed by a wooden frame and glass as enclosure.

There are already many less incorporating a frame of laminated wood and an enclosure made of three sheets of glass.

But the characteristics of this invention, with a one piece frame made out of laminated woods, with an enclosure of three sheets of glass, where two are glued and separated by an air chamber and also incorporating in its closing a decompression chamber and varied airtight elastic sheets are new and have not been disclosed all together in any embodiment.

WO9802632 and DE102012100114 are considered the closet prior art. The German application discloses a window with a leaf that comprises two glass panes. Both panes are distanced by a spacer, that doubles as a frame, and joined through a strip. The PCT application discloses a frameless leaf or wing with two glass panes, in this case spaced by a U-shaped section.

The inventor is not aware of any prior art that incorporates the layout presented by the current invention, nor the advantages inherent to this layout.

### DESCRIPTION OF THE INVENTION

The proposed invention refers to a new window layout of the type of windows made up starting with a micro-laminated woods frame and several glass sheets with a built-in air chamber and that is constituted by a frame made of micro-laminated woods, glued together with strong adhesives and a closing sheet constituted, from the outside to the inside, by a block of two laminated glass sheets and a sheet of thick tempered glass of a larger size, and separated by a vacuum chamber.

The laminated glass sheets present a triangular shaped elastic element that encircles them along the perimeter and the sheet of tempered glass presents at all its perimeter a cushion type elastic element.

The closing space between the frame and the closing sheet is occupied by a decompression chamber attached to the framework, whose decompression chamber shows an elastic sheet adhered to by its free side that serves as a stop for the closing fitting placed on the tempered glass by means of an adhesive that entails a drive handle.

### DESCRIPTION OF THE DRAWINGS

A sheet of drawings is attached for a better understanding of the invention, where the following is shown:

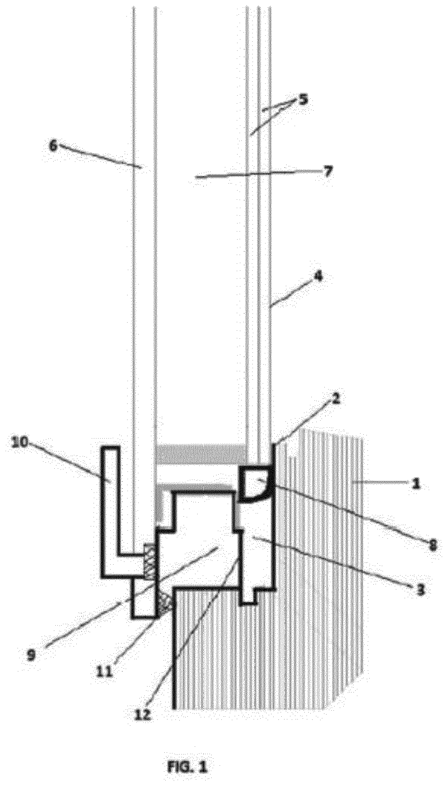

FIGURE 1.- Schematic sectioned view of the window
and in the figure, identical elements are designated with the same reference and among them, the following can be identified:
(1).- window frame
(2).- elastic element fixed to the frame.
(3).- decompression chamber.
(4).- Closing sheet.
(5).- laminated glass.
(6).- tempered glass.
(7).- vacuum chamber.
(8).- triangular elastic element.
(9).- Open/close fitting.
(10).- drive handle for the open/close fitting.
(11).- cushion type elastic element
(12).- Elastic support element

### PREFERRED EMBODIMENTS OF THE INVENTION

The proposed invention refers to a new window layout of the type of windows made up starting with a micro-laminated wood frame and several glass sheets with a built-in air chamber and that is constituted by a frame (1) made of micro-laminated wood, glued together with a strong adhesive and a closing sheet (4) constituted, from the outside to the inside, by a block of two laminated glass sheets and a sheet of thick tempered glass (6) of a larger size, and separated by a vacuum chamber (7).

The laminated glass sheets present a triangular elastic element (8) that encircles them along the perimeter and the sheet of tempered glass presents in its entire perimeter a cushion type elastic element (11).

The closing space between the frame (1) and the closing sheet (4) is occupied by a decompression chamber (3) attached to the frame (1), whose decompression chamber shows an elastic sheet adhered to by its free side that serves as a stop for the closing fitting (9) placed on the tempered glass (6) by means of an adhesive that entails a drive handle (10).

The nature of the invention sufficiently described, as well as the way to be embodied, it has to be noted that the layouts above described and represented in the attached drawings are susceptible to changes in detail, as long as these do not change the fundamental principles laid down in the previous paragraphs and defined in the following claim.

## Claims

1. Improved two pieces window comprised by a frame (1) manufactured with micro-laminated woods, joined by strong adhesives and a closing sheet (4) constituted, from the outside to the inside by a block of two laminated glass sheets and a sheet of thick tempered glass (6), of a larger size, and separated by a vacuum chamber (7) **characterized in that**
the laminated glass sheets present a triangular elastic element (8) that encircles them along the perimeter, located at their edge, and the sheet of tempered glass presents in its entire perimeter a cushion type elastic element (11) and
the closing space between the frame (1) and the closing sheet (4) is occupied by a decompression chamber (3) attached to the frame (1), whose decompression chamber shows an elastic sheet adhered to by its free side that serves as a stop for the closing fitting (9), which closing fitting entails a drive handle (10), and is placed on the tempered glass (6) by means of an adhesive.

## Patentansprüche

1. Verbessertes zweiteiliges Fenster, das aus einem Rahmen (1), deraus mikrolaminierten Hölzern hergestellt ist, die durch starke Klebstoffe verbunden sind, und einer Abschlussscheibe (4) besteht, die von außen nach innen aus einem Block aus zwei Verbundglasscheiben und einer Scheibe aus dickem gehärtetem Glas (6) von größerer Größe besteht. Sie sind durch eine Vakuumkammer (7) getrennt, in der
die Verbundglasscheiben ein dreieckiges elastisches Element (8) darstellen, das sie entlang des Umfangs umgibt und sich an ihrem Rand befindet. Die Scheibe aus gehärtetem Glas weist an ihrem gesamten Umfang ein elastisches, kissenartiges Element (11) auf und
der Schließraum zwischen dem Rahmen (1) und der Abschlussscheibe (4) wird von einer am Rahmen (1) angebrachten Dekompressionskammer (3) belegt, deren Dekompressionskammer eine elastische Scheibe zeigt, an der sie durch ihre freie Seite haftet, die als Halt für die Schließarmatur dient(9), mit einem Steuergriff (10) versehen und an der platziert ist das gehärtete Glas (6) mit Hilfe eines Klebstoffs

## Revendications

1. Une fenêtre améliorée en deux parties composée d'un cadre (1) fabriqué avec des micro-lamelles de bois, jointes par des produits adhésifs puissants et une plaque de 5 fermeture (4) constituée, de l'extérieur vers l'intérieur par un bloc de deux des feuilles de verre et une feuille de verre trempé épais (6), de plus grande taille, et séparées par une chambre sous vide (7) **caractérisée par le fait que** les feuilles de verre laminées présentent un élément élastique triangulaire (8) qui les encercle le long du pourtour, situé à leur bord et la feuille de verre trempé présente sur tout son pourtour 10 un élément élastique semblable à un coussin (11) et l'espace de fermeture entre le cadre (1) et la plaque de fermeture (4) est occupé par une chambre de décompression (3) fixée au cadre (1), dont la chambre de décompression comporte une feuille élastique collée par sa face libre qui sert de butée pour le raccord de fermeture (9), ce dernier comportant une poignée de commande (10), et est placé sur le verre trempé (6) grâce à un adhésif.
